# EUROPEAN PATENT SPECIFICATION

(11) **EP 3 774 204 B1**
(45) Date of publication and mention of the grant of the patent: **15.05.2024**
(21) Application number: 19776239.6
(22) Date of filing: 26.03.2019
(51) Int. Cl.: B25J 13/00, F16M 13/04, B25J 7/00, B25J 9/02, B25J 9/10, B25J 15/02, B65G 47/86

(54) **GRIPPING AND MOBILIZING SYSTEM**
GREIF- UND MOBILISIERUNGSSYSTEM
SYSTÈME DE PRÉHENSION ET DE MOBILISATION

(30) Priority: 27.03.2018 US 201862648922 P
(43) Date of publication of application: 17.02.2021
(73) Proprietor: Idea Machine Development Design & Production Ltd., 7670503 Rehovot (IL)
(72) Inventor: TURGEMAN, Shlomo, 7670503 Rehovot (IL); SHEFFER, Eitan, 7670503 Rehovot (IL); LAVI, Ben Zion, 7670503 Rehovot (IL)
(74) Representative: Ouzman, Beverley Nicola Claire
(86) International application number: PCT/IB2019/052463
(87) International publication number: WO 2019/186406

(56) References cited:
- CN-A- 106 737 763
- CN-A- 107 416 446
- DE-A1- 2 702 974
- JP-A- S59 146 774
- JP-A- 2018 534 490
- US-A1- 2009 283 490
- US-A1- 2010 119 413
- US-A1- 2011 150 611
- US-A1- 2016 023 213
- US-B2- 7 390 458

## Description

### BACKGROUND

Plates containing a multiplicity of wells for holding samples of chemicals, cells or other biological materials for observation, are known in the art. Commonly, such plates have a 3:2 aspect ratio and thus contain 24 (4 × 6), 96 (8 × 12), 384 (16 × 24), or 1536 (32 × 48) wells; a typical 96-well plate is 128 mm long and 86 mm wide, and standards for the footprint and bottom outside flange of 96-well plates are described in ANSI/SBS 1-2004 and ANSI/SBS 3-2004, respectively.

Such multi-well plates, also sometimes referred to as microwell plates or microtiter plates depending on the volume of the wells, are generally constructed of plastic, e.g. polystyrene, polypropylene or polycarbonate, or a combination of such materials, in some cases also incorporating glass in the bottom portion of the plate. In many applications, the bottom of the well is transparent to a frequency of light that will be used to observe the sample. The size of wells in terms of depth, height, and total volume, as well the shape of the wells and the shape of the bottoms of the wells, varies in accordance with the particular use to which the plate is to be put.

Examples of commercial suppliers of such plates are:
Perkin-Elmer (see http://www.perkinelmer.com/CMSResources/Images/44-73879SPC_MicroplateDimensionsSummaryChart.pdf);
Sigma-Aldrich (see http://www.sigmaaldrich.com/labware/labware-products.html?TablePage=9576216); and
Thermo-Scientific (see http://www.thermoscientific.com/ecomm/servlet/productscatalog_11152_81996_-1_4).

One area in which widespread use of such plates is made is high-throughput screening for the testing of compounds in drug development, binding assays for antigens and the like.

Often, in high-throughput screening and other applications, automated machinery is used to move multiwell plates from one location to another, such as from a storage incubator to a microscope system for viewing the content of the wells or vice versa. However, because of the sensitivity of biological materials tested in microwell plates, it is desirable to minimize the disturbance of the contents of such plates. Maintaining such plates level while they are moved is generally a minimal goal, to avoid spillage of the contents.

CN107416446 discloses a gripping system comprising a gripping assembly, a parallelogram-type arm assembly for moving the gripping assembly vertically in a levelled way, and a linearly-actuated base.

### SUMMARY

There is provided in accordance with the invention a gripping system including:
a pneumatic arm assembly including:
   an anchoring bracket;
   a first pair of arms pivotably attached to opposing sides of the anchoring bracket at a pair of respective first positions, each arm in the first pair of arms being adapted to move in a corresponding plane generally perpendicular to an x-y plane;
   a second pair of arms pivotably attached to the opposing sides of the anchoring bracket at a pair of respective second positions, each arm in the second pair of arms being adapted to move in a corresponding plane;
   a cam subassembly connected to the first pair of arms; and
   a connector bracket, pivotably attached to the first and second pairs of arms, and motion of the connector bracket results from motion of the first and second pairs of arms;
a gripping assembly, mounted onto the connector bracket, the gripping assembly including a pair of gripping arms adapted to grip an object; and
a pneumatic control assembly, including a pneumatic piston functionally associated with the cam subassembly, configured so that pneumatic changes in the pneumatic piston are applied, via the cam subassembly, to the first pair of arms, so as to drive motion of the first pair of arms, the second pair of arms, the connector bracket, and the gripping arms,
wherein each said second position is closer to said connector bracket than the first position along the same side of said anchoring bracket,
wherein during the motion of the connector bracket and the gripping arms, an angle of the connector bracket and of the gripping arms relative to the x-y plane remains constant within a threshold of 0.2 degrees,
wherein the connector bracket includes an upper wall, a back wall generally perpendicular to the upper wall, and two side walls extending from opposing sides of the back wall, the side walls being generally perpendicular to the upper wall and to the back wall,
wherein an arm of the first pair of arms is pivotably attached to each of the side walls at a first bracket position, an arm of the second pair of arms is pivotably attached to each of the side walls at a second bracket position, wherein each said first bracket position is closer to said anchoring bracket than the second bracket position along same side wall of said connector bracket,
wherein the gripping assembly is mounted onto a lower surface of the upper wall of the connector bracket,
wherein the gripping assembly includes a second pneumatic control assembly, functionally associated with the gripping arms and adapted to move the gripping arms towards and away from each other, to facilitate gripping and releasing of an object.

In some embodiments, a first length of the arms in the first pair of arms is in the range of 4 cm to 10 cm, such as 4 cm to 8 cm or 4 cm to 6 cm, e.g. 4 cm, 4.5 cm, 5 cm, 5.5 cm, 6 cm, 6.5, 7 cm, 7.5 cm, 8 cm, 8.5 cm, 9 cm, 9.5 cm or 10 cm. In some embodiments, a second length of the arms in the second pair of arms is in the range of 4 cm to 10 cm, such as 4 cm to 8 cm or 4 cm to 6 cm, e.g. 4 cm, 4.5 cm, 5 cm, 5.5 cm, 6 cm, 6.5, 7 cm, 7.5 cm, 8 cm, 8.5 cm, 9 cm, 9.5 cm or 10 cm.

In some embodiments, a difference between a first length of the arms in the first pair of arms and a second length of arms in the second pair of arms is at most 0.05mm.

In some embodiments, pivotal motion of the first and the second pairs of arms relative to the anchoring bracket is limited at a first end by a surface of the anchoring bracket.

In some embodiments, pivotal motion of the first and the second pairs of arms relative to the anchoring bracket is limited by a range of motion of a pneumatic plunger forming part of the pneumatic piston.

According to the invention, each of the arms in the first pair of arms and in the second pair of arms includes a first end, pivotably attached to the anchoring bracket, and a second end, distal to the first end, pivotably attached to the connector bracket.

In some embodiments, when the first pair of arms pivot relative to the anchoring bracket from a first orientation to a second orientation utilizing the full range of motion of arms in the first pair of arms, a vertical difference between the second end of each of the arms in the first orientation and the second end of each of the arms in the second orientation is in the range of 20 mm to 50 mm, e.g. with the range of 30 mm to 40 mm, for example 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm or 50 mm.

According to the invention, when the first pair of arms pivot relative to the anchoring bracket from a first orientation to a second orientation utilizing the full range of motion of arms in the first pair of arms, a vertical difference between a location of gripping ends of the gripping arms when the first pair of arms are in the first orientation and a location of the gripping ends of the gripping arms when the first pair of arms are in the second orientation is in the range of 20 mm to 50 mm, e.g. with the range of 30 mm to 40 mm, for example 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm or 50 mm.

In some embodiments, the gripping system further includes an object gripped by the gripping arms. In some embodiments, during motion of the gripping arms, an angular orientation of the object relative to the x-y plane remains constant within a threshold of 0.2 degrees.

According to the invention, the gripping system further includes a mobilizing system functionally associated with the pneumatic arm assembly, the mobilizing system adapted to at least one of (a) move the pneumatic arm assembly, so as to change a location of the first and the second pairs of arms within the x-y plane and (b) pivot the pneumatic arm assembly about the z-axis, so as to change an orientation of the first and the second pairs of arms within the x-y plane.

In some embodiments, the object is a multiwell plate disposed between the gripping arms and gripped thereby.

There is further provided, in accordance with an embodiment of the present invention, a method for raising or lowering an object, the method including:
while the object is located at an origin height, gripping the object with the gripping arms of the gripping system described herein; and
pivoting the first and second pairs of arms relative to the anchoring bracket, causing vertical movement of the gripping arms and the object gripped therebetween to a destination height,
wherein, during the pivoting of the first and second pairs of arms, an angular orientation between the object and an x-y plane remains constant within a threshold of 0.2 degrees.

In some embodiments, the method further includes moving the gripping system using the mobilizing system, while maintaining the object level.

According to the invention, the object includes a multiwell plate.

Unless otherwise defined, all technical and scientific terms used herein have the same meaning as commonly understood by one of ordinary skill in the art to which the invention pertains. In case of conflict, the specification, including definitions, will take precedence.

As used herein, the terms "comprising", "including", "having" and grammatical variants thereof are to be taken as specifying the stated features, integers, steps or components but do not preclude the addition of one or more additional features, integers, steps, components or groups thereof. These terms encompass the terms "consisting of" and "consisting essentially of'.

As used herein, the indefinite articles "a" and "an" mean "at least one" or "one or more" unless the context clearly dictates otherwise.

As used herein, an object is considered to be "kept level" during motion of the object (a) if during such motion the angle of the object, relative to the horizontal, does not vary by more than 0.2 degrees, e.g. not more than 0.1 degrees or (b) if the tilt of a base surface of the object during the motion, relative to the initial position of the base surface, is at most 0.2 mm, e.g. at most 0.1 mm.

As used herein, the term x-y plane refers to a base plane, which is typically generally horizontal, such as the surface of a table, the floor, and the like. A base surface to which a device in accordance with the presently claimed invention is anchored will generally define such a base plane.

### BRIEF DESCRIPTION OF THE FIGURES

Some embodiments of the invention are described herein with reference to the accompanying figures. The description, together with the figures, makes apparent to a person having ordinary skill in the art how some embodiments of the invention may be practiced. The figures are for the purpose of illustrative discussion and no attempt is made to show structural details of an embodiment in more detail than is necessary for a fundamental understanding of the invention. For the sake of clarity, some objects depicted in the figures are not to scale.

In the Figures:
Figure 1A is perspective illustration of a gripping and mobilizing system in accordance with an embodiment of the teachings herein;
Figure 1B is a partially cut-away perspective illustration of the gripping and mobilizing system of Figure 1A;
Figures 2A and 2B are, respectively, planar side view illustrations of the gripping and mobilizing system of Figures 1A and 1B, in two operative positions;
Figure 3 is a sectional view illustration of the gripping and mobilizing system of Figures 1A and 1B, the sectional illustration taken along section lines III-III in Figure 1A; and
Figures 4A and 4B are, respectively, an exploded view illustration and a perspective view illustration of a pneumatic arm subsystem forming part of the system of Figures 1A to 3.

### DESCRIPTION OF SOME EMBODIMENTS OF THE INVENTION

There is provided a gripping and mobilizing system, for moving an object, such as a multi-well plate, while keeping it level and providing substantially smooth movement. As a result, disturbance of the contents of the plate can be minimized. The system can move the multi-well plate along a vertical (Z) axis, and can be mounted on a suitable platform to enable motion from one location to another along the X and Y axes.

The principles, uses and implementations of the teachings herein may be better understood with reference to the accompanying description and figures.

Before explaining at least one embodiment of the invention in detail, it is to be understood that the invention is not limited in its applications to the details of construction and the arrangement of the components and/or methods set forth in the following description and/or illustrated in the drawings and/or the Examples. The invention can be implemented with other embodiments and can be practiced or carried out in various ways. It is also understood that the phraseology and terminology employed herein is for descriptive purpose and should not be regarded as limiting.

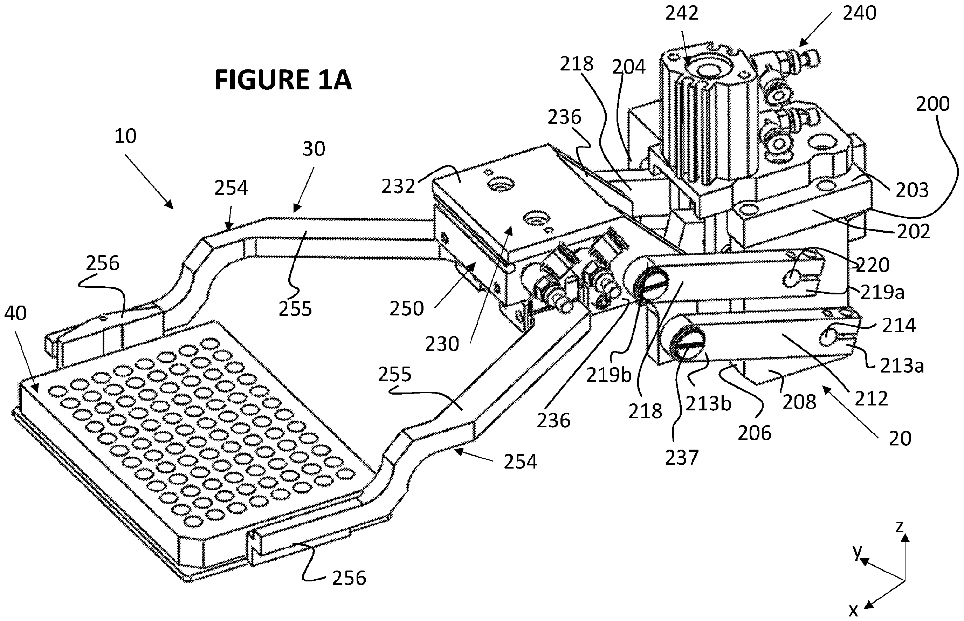

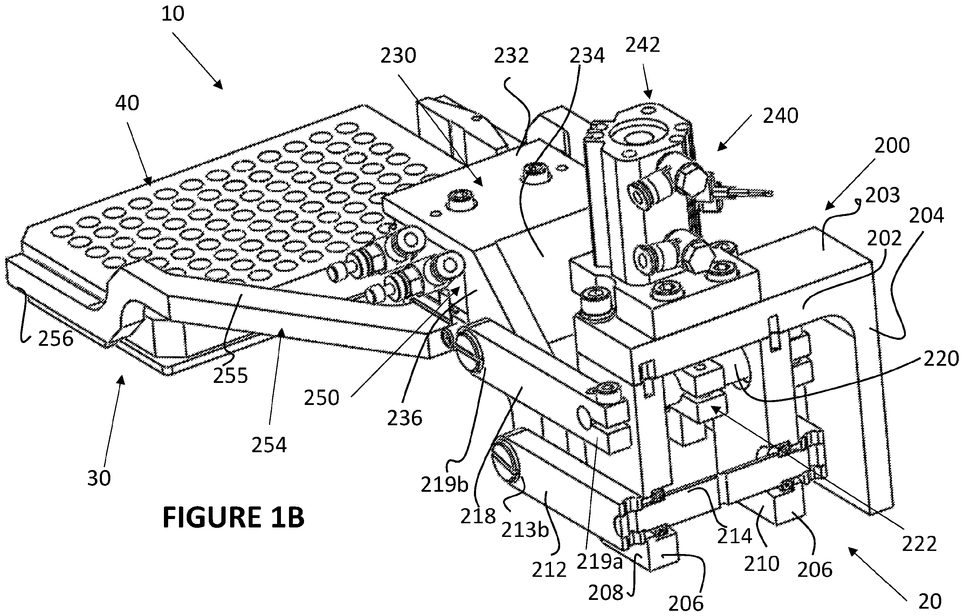

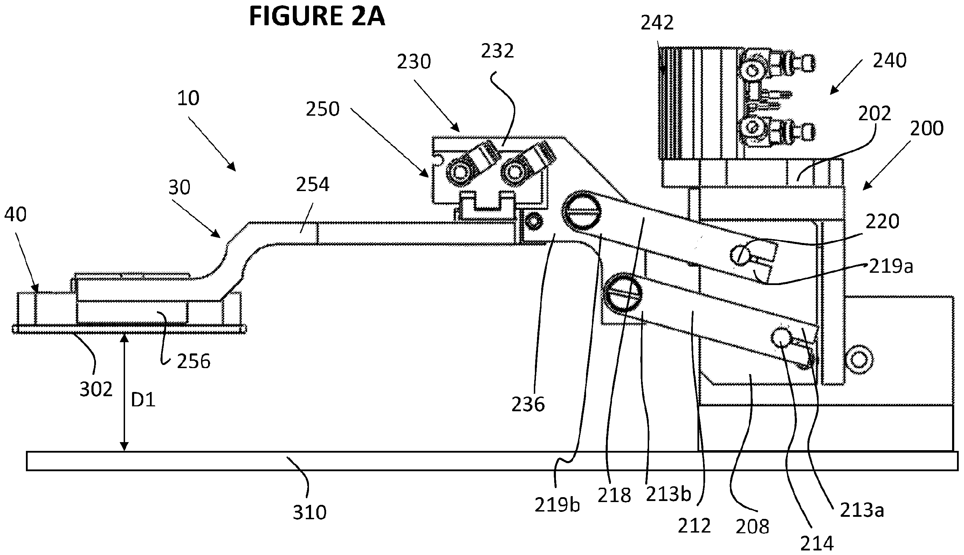

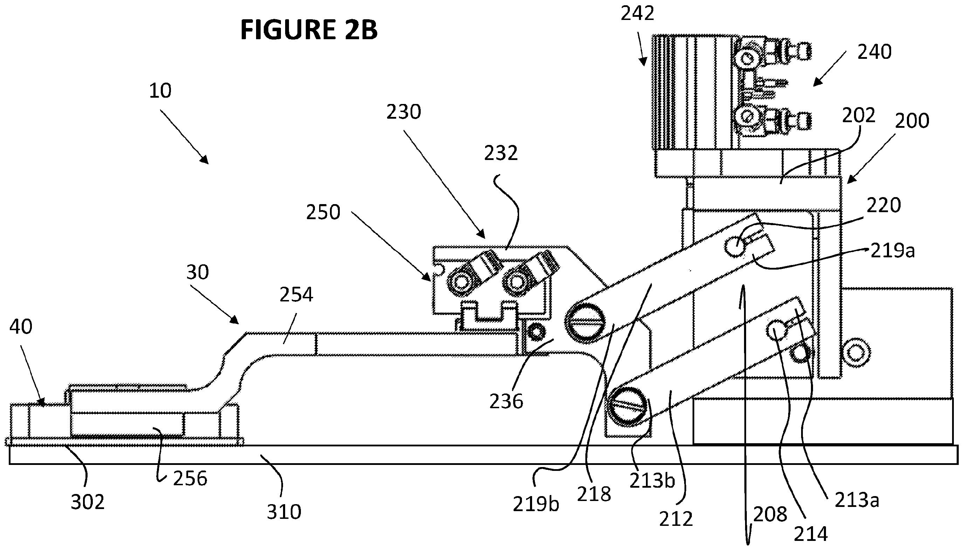

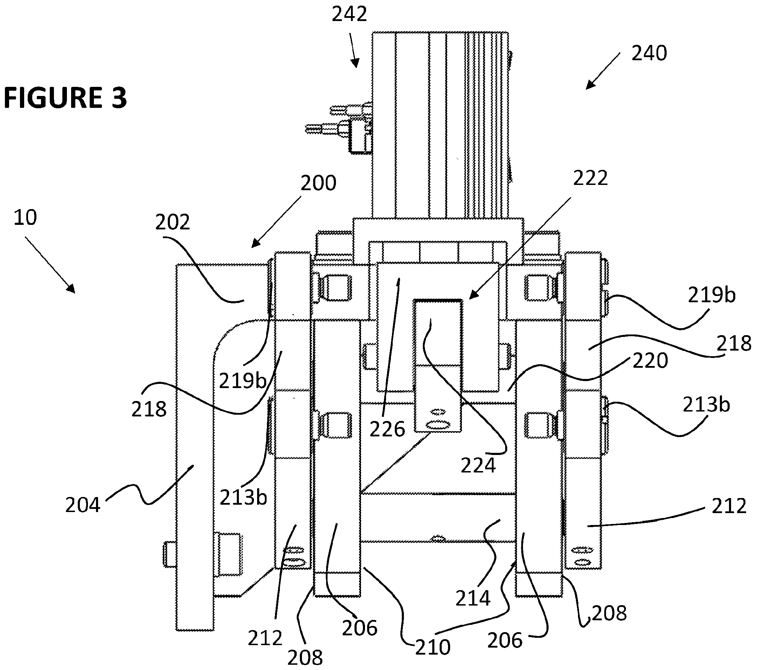

Reference is now made to Figure 1A, which is a perspective illustration of a gripping and mobilizing system **10** in accordance with an embodiment of the teachings herein, to Figure 1B, which is a partially cut-away perspective illustration of the gripping and mobilizing system **10,** to Figures 2A and 2B, which are, respectively, planar side view illustrations of the gripping and mobilizing system **10** in two operative positions, and to Figure 3, which is a sectional illustration of the gripping and mobilizing system **10.**

As seen, gripping and mobilizing system **10** includes a pneumatic arm subassembly **20,** which is connected to and controls motion of a gripping subassembly **30,** adapted to grip and move a multi-well plate **40.**

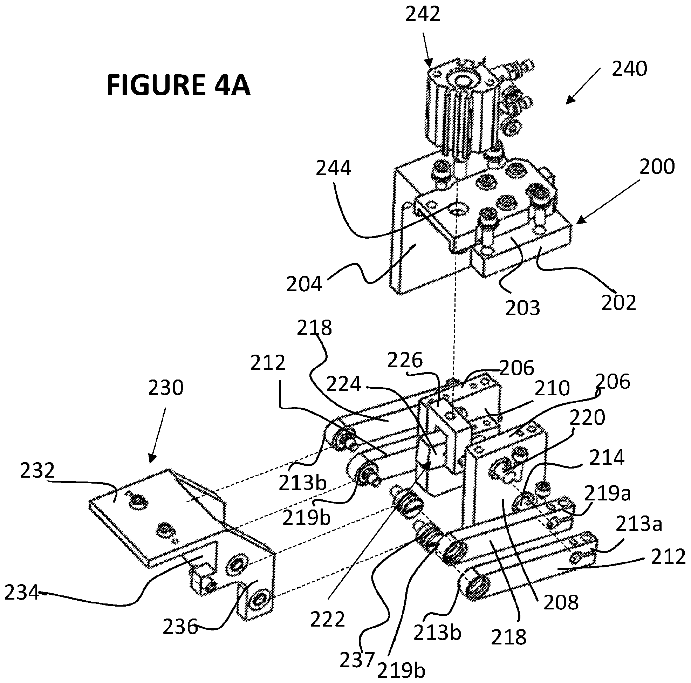

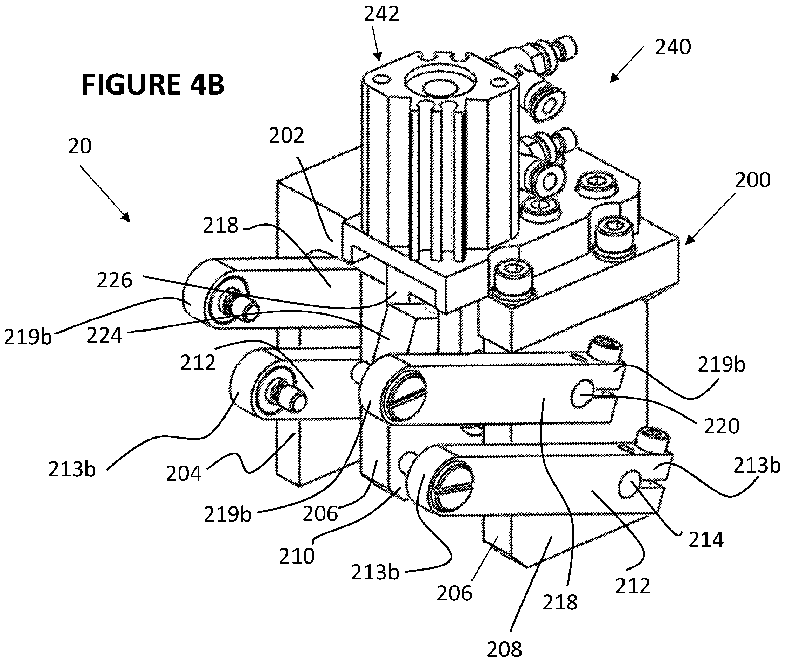

Pneumatic arm subassembly **20** is described with additional reference to Figures 4A and 4B, which are, respectively, an exploded view illustration and a perspective view illustration of pneumatic arm subsystem **20.**

Pneumatic arm subassembly **20** includes an L-shaped anchoring bracket **200,** including a substantially horizontal portion **202** having an upper surface **203,** and a substantially vertical leg **204.** L-shaped anchoring bracket **200** is adapted to be anchored to a base platform (not explicitly shown). Extending downward from substantially horizontal portion **202,** substantially parallel to leg **204,** are a pair of substantially vertical supports **206,** which may also be anchored to the base platform. Each of supports **206** includes an exterior facing surface **208** and an interior facing surface **210,** shown also in Figure 4A.

A first pair of arms **212** is rotatably attached to each of exterior facing surfaces **208** of supports **206,** at a first position. First ends **213a** of arms **212** are connected to opposing ends of, and are adapted to be rotated by, an axle **214** extending through vertical supports **206.** A second pair of arms **218** is rotatably attached to each of exterior facing surfaces **208** of supports **206,** at a second position. First ends **219a** of arms **218** are connected to opposing ends of, and are adapted to be rotated by, an axle **220** extending through vertical supports **206.** Arms **212** and **218** are pivotable relative to the axes of axles **214** and **220,** respectively. As explained in further detail hereinbelow, the lengths of arms **212** and **218** are substantially identical. Arms **212** and **218** are configured to move within planes which are generally perpendicular to an x-y plane, such as the base surface of the system.

A cam subassembly **222** includes a bar **224** and a rectangular frame portion **226** which is open at a bottom side thereof. Bar **224** is fixedly attached to axle **220,** and frame portion **226** is mounted onto an end of bar **224,** distal to axle **220.** A bore **228** is formed in an upper side of rectangular frame portion **226,** for connection to a pneumatic control subassembly, as described hereinbelow.

A connector bracket **230** includes a horizontal planar portion **232,** a rear wall **234** perpendicular to horizontal planar portion **232,** and a pair of side legs **236** perpendicular to both the horizontal wall **232** and the rear wall **234.** Second ends **213b** of arms **212** and second ends **219b** of arms **218** are connected to side legs **236** of the connector bracket by connectors **240,** such that rotational motion of one of the pairs of arms, either **212** or **218,** results in corresponding motion of the other pair of arms, viz. **218** or **212,** and of connector bracket **230.**

Arms **212** and **218** have the same length, but are not fully parallel to one another. Stated differently, the first position at which arms **212** are connected to supports **206** and the second position at which arms **218** are connected to supports **206** are at different vertical heights and at different horizontal locations (locations along the X-axis) such that the first and second positions are diagonal to one another. Similarly, a first position at which arms **212** are connected to side legs **236** and the second position at which arms **218** are connected to side legs **236** are at different vertical heights and at different horizontal locations (locations along the X-axis of the connector bracket) such that the first and second positions are diagonal to one another.

It will be noted that, when connected to arms **212** and **218,** connector bracket **230** has no degrees of freedom relative to arms **212** and **218,** and cannot rotate, tip, or tilt relative to either of the axes along which it is connected to arms **212** and **218.** As such, horizontal planar portion **232** of connector bracket **230** is parallel to horizontal portion **202** at all times, and rotational motion of arms **212** and **218** about respective axes of axles **214** and **220** is translated at least in part to vertical motion of connector bracket **230,** i.e. a motion component along the z-axis, while the orientation of the connector bracket **230** relative to the X-Y plane or to a base surface parallel thereto, such as the floor, does not change.

In some embodiments, such as the illustrated embodiment, the arms **212** and **218** are connected to connector bracket **230** by shoulder pins **237,** which are fixed relative to connector bracket **230** and are pivotable relative to arms **212** and **218.** In some such embodiments, bearings are disposed about at least a portion of shoulder pins **237,** to support such pivoting between the pins **237** and the arms **212** and **218.**

A pneumatic control subassembly **240** is mounted onto upper surface **203** of anchoring bracket **200.** A pneumatic piston **242** of subassembly **240,** extends through a bore **244** in horizontal portion **202** of anchoring bracket **200,** and through the upper side of rectangular frame portion **226** of cam assembly **222,** for pneumatic control of axle **220** to drive rotational motion of arm pairs **212** and **218** as explained herein.

Mounted onto a bottom side of horizontal planar portion **232** of connector bracket **230** is the gripping subassembly **30.** Specifically, the gripping subassembly includes a second pneumatic control assembly **250,** which is mounted onto planar portion **232.** Extending from either side of second pneumatic control assembly **250** is a gripping arm **254,** which includes a generally planar horizontal region **255** and terminates in a flat gripping end **256.** Gripping ends **256** are substantially parallel to one another, and are generally perpendicular to a base surface, such as the floor. Second pneumatic control assembly **250** is adapted to move gripping arms **254** such that the distance between the arms changes, without changing the rotational orientation of the arms, such that horizontal regions **255** remain substantially parallel to the base surface, or to the floor, and the gripping ends **256** remain parallel to each other and perpendicular to the floor, throughout the motion of the gripping arms **254.** The gripping arms may be used to grip any object, such as a multi-well plate **300** illustrated in Figures 1A to 2B.

In use, pneumatic control subassembly **240** pneumatically causes motion of pneumatic transmission subassembly **222.** Specifically, pneumatic piston **242,** which is attached to frame portion **226,** drives pneumatic motion of frame portion **226** which results in corresponding pneumatic motion of bar **224** and of axle **220** fixedly attached thereto. As explained above, due to arms **212** and **218** being fixedly connected to side legs **236** of connector bracket **230,** motion of axle **220** results in corresponding motion of arms **218,** connector bracket **230,** and arms **212.** Due to the fixed connection between connector bracket **230** and the gripping subassembly **30,** motion of the arms **212** and **218** results in raising and lowering of the gripping arms **254.** However, because the connector bracket **230** has no degrees of freedom relative to arms **212** and **218,** and always moves together with the arms and remains horizontal, and because the gripping arms do not have vertical or rotational degrees of freedom relative to the connector bracket **230,** any motion of arms **212** and **218** results in motion of the gripping arms **254,** without changing the direction of the gripping ends **256** relative to the horizontal. Consequently, any object gripped by gripping ends **256** retains its three-dimensional orientation relative to the x-y plane during motion, e.g. the object remains parallel to the horizontal, and does not tilt or shift, during motion of arms **212** and **218** and corresponding motion of arms **256.**

The range of motion of arms **212** and **218** is mechanically limited. Specifically, downward motion is limited by the characteristics of the pneumatic piston **242,** and specifically by the length of the plunger (not shown) of the pneumatic piston **242.** Upward motion is limited by engagement of arm **218** with horizontal top portion **202** of anchoring bracket **200,** as seen clearly in Figure 1A. As such, the angular range of motion of the arms is dependent on the length of the pneumatic piston, wherein a longer piston allows for a greater angular range of motion. However, the radius of arc of motion of arms **212** and **218,** and the length of such arc, are dependent on the length of arms **212** and **218.**

It will be appreciated that, when an object is held in gripping arms **254** in a specific orientation, the object remains level with respect to that specific orientation, throughout the motion of arms **254.** In order to maintain an angular arrangement of the object within a range of 0-0.2 degrees from the specific orientation, during motion of gripping arms **254,** the lengths of arms **212** and **218** must be equal, or within a threshold of 0-0.05 mm, e.g. within of 0-0.02 mm, from equal.

The smoothness of motion of arms **212** and **218,** and consequently the smoothness of vertical motion of gripping arms **254,** is dependent on characteristics of the pneumatic piston **242,** such that the smoother the motion of the pneumatic piston, the smoother the motion of the arms **212, 218,** and **254.**

In the illustrated embodiment shown in Figures 2A and 2B, gripping arms **254** hold multiwell plate **300,** such that a lower surface **302** of the multiwell plate is substantially parallel to a base surface **310,** such as a table or a floor. In the position shown in Figure 2A, arms **212** and **218** are angled upward away from the base surface **310,** such that plate **300** is raised above base surface **310** to a first distance D1. In the position shown in Figure 2B, arms **212** and **218** are angled toward the base surface **310,** such that plate **300** is placed directly on base surface **310.** As such, downward motion of arms **212** and **218** (between the position shown in Figure 2A and the position shown in Figure 2B) results in corresponding downward motion of plate **300,** while constantly maintaining lower surface **302** of the plate substantially parallel to the base surface.

In some embodiments, for example in embodiments in which the object to be moved is a multi-well plate as illustrated in Figures 1A to 2B, the lengths of arms **212** and **218** are in the range of 4 cm to 10 cm, such as 4 cm to 8 cm or 4 cm to 6 cm, e.g. 4 cm, 4.5 cm, 5 cm, 5.5 cm, 6 cm, 6.5, 7 cm, 7.5 cm, 8 cm, 8.5 cm, 9 cm, 9.5 cm or 10 cm . In some such embodiments, the vertical difference D1 between the height of the plate when held at the lowest position of the arms, for example as shown in Figure 2B, and the height of the plate when held at the highest position of the arms, for example as shown in Figure 2A is in the range of 20 mm to 50 mm, e.g. with the range of 30 mm to 40 mm, for example 20 mm, 21 mm, 22 mm, 23 mm, 24 mm, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm or 50 mm.

In some embodiments, the gripping and mobilizing system **10** may be mounted onto a mobilizing assembly (not explicitly shown) capable of moving the gripping and mobilizing system **10** along the X, Y, and Z axes, and/or capable or pivoting the gripping and mobilizing system **10** such that gripping arms **254** may point to different directions at different times. Such a mobilizing assembly would facilitate use of the gripping and mobilizing system **10** for lifting an object from a first location, moving the object to a second location, and placing the object at the second location, while keeping the object level, and/or maintaining the three-dimensional orientation of the object, relative to the x-y plane throughout the motion of the object. For example, the gripping and mobilizing system **10** may lift multiwell plate **40** from a storage incubator, move multiwell plate **40** to a microscope system by motion of the mobilizing assembly, and place multiwell plate **40** on the microscope system, while maintaining the base surface of the multwell plate level during motion thereof. As a result, the disruption of the content of the multiwell plate **40** by the motion of the plate may be minimized.

It will be appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

Citation or identification of any reference in this application shall not be construed as an admission that such reference is available as prior art to the invention.

Section headings are used herein to ease understanding of the specification and should not be construed as necessarily limiting.

## Claims

1. A gripping system (10) comprising:
a pneumatic arm assembly (20) including:
an anchoring bracket (200);
a first pair of arms (212) pivotably attached to opposing sides of said anchoring bracket (200) at a pair of respective first positions, each arm in said first pair of arms (212) being adapted to move in a corresponding plane generally perpendicular to an x-y plane;
a second pair of arms (218) pivotably attached to said opposing sides of said anchoring bracket (200) at a pair of respective second positions, each arm in said second pair of arms (218) being adapted to move in a said corresponding plane;
a cam subassembly (222) connected to said first pair of arms (212); and
a connector bracket (230), pivotably attached to said first and second pairs of arms (212, 218), and motion of said connector bracket results from motion of said first and second pairs of arms (212, 218);
a gripping assembly (30), mounted onto said connector bracket (230), said gripping assembly (30) including a pair of gripping arms (254) adapted to grip an object; and
a pneumatic control assembly (240), including a pneumatic piston (242) functionally associated with said cam subassembly (222), configured so that pneumatic changes in said pneumatic piston (242) are applied, via said cam subassembly (222), to said first pair of arms (212), so as to drive motion of said first pair of arms (212), said second pair of arms (218), said connector bracket (230), and said gripping arms (254),
wherein each said second position is closer to said connector bracket (230) than the first position along the same side of said anchoring bracket (200); and
wherein during said motion of said connector bracket (230) and said gripping arms (254), an angle of said connector bracket (230) and of said gripping arms (254) relative to said x-y plane remains constant within a threshold of 0.2 degrees;
said connector bracket (230) including an upper wall (232), a back wall (234) perpendicular to said upper wall (232), and two side walls (236) extending from opposing sides of said back wall (234), said side walls (236) being perpendicular to said upper wall (232) and to said back wall (234), wherein an arm of said first pair of arms (212) is pivotably attached to each of said side walls (236) at a first bracket position, an arm of said second pair of arms (218) is pivotably attached to each of said side walls (236) at a second bracket position, wherein each said first bracket position is closer to said anchoring bracket (200) than the second bracket position along same side wall (236) of said connector bracket (230);
said gripping assembly (30) being mounted onto a lower surface of said upper wall (232) of said connector bracket (230), the gripping assembly (30) including a second pneumatic control assembly (250), functionally associated with said gripping arms (254) and adapted to move said gripping arms (254) towards and away from each other, to facilitate gripping and releasing of an object;
each of said arms in said first pair of arms (212) and in said second pair of arms (218) including a first end (213a, 219a), pivotably attached to said anchoring bracket (200), and a second end (213b, 219b), distal to said first end (213a, 219a), pivotably attached to said connector bracket (230); optionally, wherein when said first pair of arms (212) pivot relative to said anchoring bracket (200) from a first orientation to a second orientation utilizing the full range of motion of arms in said first pair of arms (212), a vertical difference between said second end of each of said arms in said first orientation and said second end of each of said arms in said second orientation is in the range of 20 mm to 50 mm;
wherein when said first pair of arms (212) pivot relative to said anchoring bracket (200) from a first orientation to a second orientation utilizing the full range of motion of arms in said first pair of arms (212), a vertical difference between a location of gripping ends (256) of said gripping arms (254) when said first pair of arms (212) are in said first orientation and a location of said gripping ends (256) of said gripping arms (254) when said first pair of arms (212) are in said second orientation is in the range of 20 mm to 50 mm;
the gripping system (10) further comprising a mobilizing system functionally associated with said pneumatic arm assembly (20), said mobilizing system adapted to at least one of (a) move said pneumatic arm assembly, so as to change a location of said first and said second pairs of arms (212, 218) within said x-y plane and (b) pivot said pneumatic arm assembly about the z-axis, so as to change an orientation of said first and said second pairs of arms (212, 218) within said x-y plane.

2. The gripping system (10) of claim 1, wherein at least one of the following is true: (a) a first length of said arms in said first pair of arms (212) is in the range of 4 cm to 10 cm; (b) a second length of said arms in said second pair of arms (218) is in the range of 4 cm to 10 cm; and (c) a difference between a first length of said arms in said first pair of arms (212) and a second length of arms in said second pair of arms (218) is at most 0.05mm.

3. The gripping system (10) of any one of claims 1 to 2, wherein at least one of the following is true: (a) pivotal motion of said first and said second pairs of arms (212, 218) relative to said anchoring bracket (200) is limited at a first end of said first and said second pairs of arms (212, 218) by a surface of said anchoring bracket; (b) pivotal motion of said first and said second pairs of arms (212, 218) relative to said anchoring bracket (200) is limited by a range of motion of a pneumatic plunger forming part of said pneumatic piston (242).

4. The gripping system of any one of claims 1 to 3, further comprising an object gripped by said gripping arms (254); optionally, wherein during motion of said gripping arms (254), an angular orientation of said object gripped by said gripping arms (254) relative to said x-y plane remains constant within a threshold of 0.2 degrees;
wherein said object is a multiwell plate (300) disposed between said gripping arms (254) and gripped thereby.

5. A method for raising or lowering an object, the method comprising:
while said object is located at an origin height, gripping said object with the gripping arms (254) of the gripping system (10) of any one of claims 1 to 4; and
pivoting said first and second pairs of arms (212, 218) relative to said anchoring bracket (200), causing vertical movement of said gripping arms (254) and said object gripped therebetween to a destination height,
wherein said object comprises a multiwell plate (300), and wherein, during said pivoting of said first and second pairs of arms (212, 218), an angular orientation between said object and an x-y plane remains constant within a threshold of 0.2 degrees.

6. The method of claim 5, further comprising moving said gripping system (10) using said mobilizing system, while maintaining said object level.

## Patentansprüche

1. Greifsystem (10), umfassend:
eine pneumatische Armanordnung (20), die beinhaltet:
eine Verankerungshalterung (200);
ein erstes Armpaar (212), das schwenkbar an gegenüberliegenden Seiten der Verankerungshalterung (200) an einem Paar jeweiliger erster Positionen angebracht ist, wobei jeder Arm im ersten Armpaar (212) dazu angepasst ist, sich in einer entsprechenden Ebene im Allgemeinen senkrecht zu einer x-y-Ebene zu bewegen;
ein zweites Armpaar (218), das schwenkbar an den gegenüberliegenden Seiten der Verankerungshalterung (200) an einem Paar jeweiliger zweiter Positionen angebracht ist, wobei jeder Arm im zweiten Armpaar (218) dazu angepasst ist, sich in einer entsprechenden Ebene zu bewegen;
eine Nockenunteranordnung (222), die mit dem ersten Armpaar (212) verbunden ist; und
eine Verbinderhalterung (230), die schwenkbar an den ersten und zweiten Armpaar (212, 218) angebracht ist, und wobei die Bewegung der Verbinderhalterung aus der Bewegung des ersten und zweiten Armpaares (212, 218) resultiert;
eine Greifanordnung (30), die an der Verbinderhalterung (230) montiert ist, wobei die Greifanordnung (30) ein Greifarmpaar (254) beinhaltet, das zum Greifen eines Gegenstands angepasst ist; und
eine pneumatische Steueranordnung (240), die einen pneumatischen Kolben (242) beinhaltet, der funktional mit der Nockenunteranordnung (222) assoziiert ist und so konfiguriert ist, dass pneumatische Veränderungen im pneumatischen Kolben (242) über die Nockenunteranordnung (222) auf das erste Armpaar (212) angewendet werden, um eine Bewegung des ersten Armpaares (212), des zweiten Armpaares (218), der Verbinderhalterung (230) und der Greifarme (254) anzutreiben,
wobei jede zweite Position näher an der Verbinderhalterung (230) liegt als die erste Position entlang derselben Seite der Verankerungshalterung (200); und
wobei während der Bewegung der Verbinderhalterung (230) und der Greifarme (254) ein Winkel der Verbinderhalterung (230) und der Greifarme (254) relativ zur x-y-Ebene innerhalb eines Grenzwerts von 0,2 Grad konstant bleibt;
wobei die Verbinderhalterung (230) eine obere Wand (232), eine Rückwand (234), die senkrecht zur oberen Wand (232) verläuft, und zwei Seitenwände (236), die sich von gegenüberliegenden Seiten der Rückwand (234) erstrecken, beinhaltet, wobei die Seitenwände (236) senkrecht zur oberen Wand (232) und zur Rückwand (234) verlaufen, wobei ein Arm vom ersten Armpaar (212) schwenkbar an jeder der Seitenwände (236) an einer ersten Halterungsposition angebracht ist, ein Arm vom zweiten Armpaar (218) schwenkbar an jeder der Seitenwände (236) an einer zweiten Halterungsposition angebracht ist, wobei jede erste Halterungsposition näher an der Verankerungshalterung (200) liegt als die zweite Halterungsposition entlang derselben Seitenwand (236) der Verbinderhalterung (230);
wobei die Greifanordnung (30) auf einer unteren Oberfläche der oberen Wand (232) der Verbinderhalterung (230) montiert ist, wobei die Greifanordnung (30) eine zweite pneumatische Steueranordnung (250) beinhaltet, die funktionell mit den Greifarmen (254) assoziiert ist und dazu angepasst ist, die Greifarme (254) aufeinander zu und voneinander weg zu bewegen, um das Greifen und Loslassen eines Gegenstands zu erleichtern;
wobei jeder der Arme im ersten Armpaar (212) und im zweiten Armpaar (218) ein erstes Ende (213a, 219a), das schwenkbar an der Verankerungshalterung (200) angebracht ist, und ein zweites, distal zum ersten Ende (213a, 219a) liegendes Ende (213b, 219b), das schwenkbar an der Verbinderhalterung (230) angebracht ist, beinhaltet; optional wobei, wenn das erste Armpaar (212) relativ zur Verankerungshalterung (200) von einer ersten Ausrichtung in eine zweite Ausrichtung unter Nutzung des gesamten Bewegungsbereichs der Arme im ersten Armpaar (212) schwenkt, ein vertikaler Unterschied zwischen dem zweiten Ende jedes der Arme in der ersten Ausrichtung und dem zweiten Ende jedes der Arme in der zweiten Ausrichtung im Bereich von 20 mm bis 50 mm liegt;
wobei, wenn das erste Armpaar (212) relativ zur Verankerungshalterung (200) von einer ersten Ausrichtung in eine zweite Ausrichtung unter Nutzung des gesamten Bewegungsbereichs der Arme im ersten Armpaar (212) schwenkt, ein vertikaler Unterschied zwischen einem Standort von Greifenden (256) der Greifarme (254), wenn sich das erste Armpaar (212) in der ersten Ausrichtung befindet, und einem Standort der Greifenden (256) der Greifarme (254), wenn sich das erste Armpaar (212) in der zweiten Ausrichtung befindet, im Bereich von 20 mm bis 50 mm liegt;
wobei das Greifsystem (10) ferner ein Mobilisierungssystem umfasst, das funktionell mit der pneumatischen Armanordnung (20) assoziiert ist, wobei das Mobilisierungssystem dazu angepasst ist, mindestens eine von (a) die pneumatische Armanordnung zu bewegen, um einen Standort des ersten und dem zweiten Armpaares (212, 218) innerhalb der x-y-Ebene zu verändern, und (b) die pneumatische Armanordnung um die z-Achse zu schwenken, um eine Ausrichtung des ersten und des zweiten Armpaares (212, 218) innerhalb der x-y-Ebene zu verändern.

2. Greifsystem (10) nach Anspruch 1, wobei mindestens eines der folgenden gilt: (a) eine erste Länge der Arme im ersten Armpaar (212) liegt im Bereich von 4 cm bis 10 cm, (b) eine zweite Länge der Arme im zweiten Armpaar (218) liegt im Bereich von 4 cm bis 10 cm, und (c) ein Unterschied zwischen einer ersten Länge der Arme in dem ersten Armpaar (212) und einer zweiten Länge der Arme im zweiten Armpaar (218) beträgt höchstens 0,05mm.

3. Greifsystem (10) nach einem der Ansprüche 1 bis 2, wobei mindestens eines der folgenden gilt: (a) eine Schwenkbewegung des ersten und des zweiten Armpaares (212, 218) relativ zur Verankerungshalterung (200) ist an einem ersten Ende des ersten und des zweiten Armpaares (212, 218) durch eine Oberfläche der Verankerungshalterung begrenzt; (b) eine Schwenkbewegung des ersten und des zweiten Armpaares (212, 218) relativ zur Verankerungshalterung (200) ist durch einen Bewegungsbereich eines pneumatischen Druckstempels begrenzt, der Teil des pneumatischen Kolbens (242) bildet.

4. Greifsystem nach einem der Ansprüche 1 bis 3, ferner umfassend einen Gegenstand, der von den Greifarmen (254) gegriffen wird; optional wobei während der Bewegung der Greifarme (254) eine Winkelausrichtung des von den Greifarmen (254) gegriffenen Gegenstands relativ zur x-y-Ebene innerhalb eines Grenzwerts von 0,2 Grad konstant bleibt;
wobei der Gegenstand eine Multiwell-Platte (300) ist, die zwischen den Greifarmen (254) angeordnet ist und dadurch gegriffen wird.

5. Verfahren zum Anheben oder Absenken eines Gegenstands, wobei das Verfahren umfasst:
während sich der Gegenstand auf einer Ursprungshöhe befindet, Greifen des Gegenstands mit den Greifarmen (254) des Greifsystems (10) nach einem der Ansprüche 1 bis 4; und
Schwenken des ersten und zweiten Armpaares (212, 218) relativ zur Verankerungshalterung (200), wobei eine vertikale Bewegung der Greifarme (254) und des dazwischen gegriffenen Gegenstands auf eine Zielhöhe bewirkt wird,
wobei der Gegenstand eine Multiwell-Platte (300) umfasst und wobei während des Schwenkens des ersten und zweiten Armpaares (212, 218) eine Winkelausrichtung zwischen dem Gegenstand und einer x-y-Ebene innerhalb eines Grenzwertes von 0,2 Grad konstant bleibt.

6. Verfahren nach Anspruch 5, ferner umfassend das Bewegen des Greifsystems (10) unter Verwendung des Mobilisierungssystems, während die Gegenstandshöhe beibehalten wird.

## Revendications

1. Système de préhension (10) comprenant :
un ensemble de bras pneumatique (20) comprenant :
un support d'ancrage (200) ;
une première paire de bras (212) fixés de manière pivotante aux côtés opposés dudit support d'ancrage (200) au niveau d'une paire de premières positions respectives, chaque bras dans ladite première paire de bras (212) étant adapté pour se déplacer dans un plan correspondant globalement perpendiculaire à un plan x-y ;
une seconde paire de bras (218) fixés de manière pivotante auxdits côtés opposés dudit support d'ancrage (200) au niveau d'une paire de secondes positions respectives, chaque bras dans ladite seconde paire de bras (218) étant adapté pour se déplacer dans un dit plan correspondant ;
un sous-ensemble de came (222) relié à ladite première paire de bras (212) ; et
un support de connecteur (230), fixé de manière pivotante auxdites première et seconde paires de bras (212, 218), et le mouvement dudit support de connecteur a pour résultat le mouvement desdites première et seconde paires de bras (212, 218) ;
un ensemble de préhension (30), monté sur ledit support de connecteur (230), ledit ensemble de préhension (30) comprenant une paire de bras de préhension (254) adaptés pour saisir un objet ; et
un ensemble de commande pneumatique (240), comprenant un piston pneumatique (242) fonctionnellement associé audit sous-ensemble de came (222), configuré de telle sorte que des changements pneumatiques dans ledit piston pneumatique (242) soient appliqués, via ledit sous-ensemble de came (222), à ladite première paire de bras (212), de manière à entraîner le mouvement de ladite première paire de bras (212), de ladite seconde paire de bras (218), dudit support de connecteur (230) et desdits bras de préhension (254),
dans lequel chaque dite seconde position est plus proche dudit support de connecteur (230) que la première position le long du même côté dudit support d'ancrage (200) ; et
dans lequel pendant ledit mouvement dudit support de connecteur (230) et desdits bras de préhension (254), un angle dudit support de connecteur (230) et desdits bras de préhension (254) par rapport audit plan x-y reste constant dans un seuil de 0,2 degrés ;
ledit support de connecteur (230) comprenant une paroi supérieure (232), une paroi arrière (234) perpendiculaire à ladite paroi supérieure (232), et deux parois latérales (236) s'étendant depuis des côtés opposés de ladite paroi arrière (234), lesdites parois latérales (236) étant perpendiculaires à ladite paroi supérieure (232) et à ladite paroi arrière (234), dans lequel un bras de ladite première paire de bras (212) est fixé de manière pivotante à chacune desdites parois latérales (236) au niveau d'une première position de support, un bras de ladite seconde paire de bras (218) est fixé de manière pivotante à chacune desdites parois latérales (236) au niveau d'une seconde position de support, dans lequel chaque dite première position de support est plus proche dudit support d'ancrage (200) que la seconde position de support le long de la même paroi latérale (236) dudit support de connecteur (230) ;
ledit ensemble de préhension (30) étant monté sur une surface inférieure de ladite paroi supérieure (232) dudit support de connecteur (230), l'ensemble de préhension (30) comprenant un second ensemble de commande pneumatique (250), fonctionnellement associé auxdits bras de préhension (254) et adapté pour rapprocher et éloigner lesdits bras de préhension (254) l'un de l'autre, pour faciliter la préhension et la libération d'un objet ;
chacun desdits bras dans ladite première paire de bras (212) et dans ladite seconde paire de bras (218) comprenant une première extrémité (213a, 219a), fixée de manière pivotante audit support d'ancrage (200), et une seconde extrémité (213b, 219b), distale de ladite première extrémité (213a, 219a), fixée de manière pivotante audit support de connecteur (230) ; facultativement, dans lequel lorsque ladite première paire de bras (212) pivotent par rapport audit support d'ancrage (200) d'une première orientation vers une seconde orientation utilisant toute la plage de mouvement des bras dans ladite première paire de bras (212), une différence verticale entre ladite seconde extrémité de chacun desdits bras dans ladite première orientation et ladite seconde extrémité de chacun desdits bras dans ladite seconde orientation est comprise dans la plage entre 20 mm et 50 mm ;
dans lequel lorsque ladite première paire de bras (212) pivotent par rapport audit support d'ancrage (200) d'une première orientation vers une seconde orientation utilisant toute la plage de mouvement des bras dans ladite première paire de bras (212), une différence verticale entre un emplacement des extrémités de préhension (256) desdits bras de préhension (254) lorsque ladite première paire de bras (212) sont dans ladite première orientation et un emplacement desdites extrémités de préhension (256) desdits bras de préhension (254) lorsque ladite première paire de bras (212) sont dans ladite seconde orientation est comprise dans la plage de 20 mm à 50 mm ;
le système de préhension (10) comprenant en outre un système de mobilisation fonctionnellement associé audit ensemble de bras pneumatique (20), ledit système de mobilisation étant adapté pour au moins soit (a) déplacer ledit ensemble de bras pneumatique, de manière à changer un emplacement de ladite première et ladite secondes paires de bras (212, 218) à l'intérieur dudit plan x-y soit (b) pivoter ledit ensemble de bras pneumatique autour de l'axe z, de manière à modifier une orientation desdites première et seconde paires de bras (212, 218) à l'intérieur dudit plan x-y.

2. Système de préhension (10) selon la revendication 1, dans lequel au moins l'une des affirmations suivantes est vraie : (a) une première longueur desdits bras dans ladite première paire de bras (212) est comprise dans la plage entre 4 cm et 10 cm ; (b) une seconde longueur desdits bras dans ladite seconde paire de bras (218) est comprise dans la plage entre 4 cm et 10 cm ; et (c) une différence entre une première longueur desdits bras dans ladite première paire de bras (212) et une seconde longueur de bras dans ladite seconde paire de bras (218) est d'au plus 0,05 mm.

3. Système de préhension (10) selon l'une quelconque des revendications 1 à 2, dans lequel au moins l'une des affirmations suivantes est vraie : (a) le mouvement de pivot desdites première et seconde paires de bras (212, 218) par rapport audit support d'ancrage (200) est limité au niveau d'une première extrémité desdites première et seconde paires de bras (212, 218) par une surface dudit support d'ancrage ; (b) le mouvement de pivot desdites première et seconde paires de bras (212, 218) par rapport audit support d'ancrage (200) est limité par une plage de mouvement d'un plongeur pneumatique faisant partie dudit piston pneumatique (242).

4. Système de préhension selon l'une quelconque des revendications 1 à 3, comprenant en outre un objet saisi par lesdits bras de préhension (254) ; facultativement, dans lequel pendant le mouvement desdits bras de préhension (254), une orientation angulaire dudit objet saisi par lesdits bras de préhension (254) par rapport audit plan x-y reste constante dans un seuil de 0,2 degrés ;
dans lequel ledit objet est un plateau multi-cavités (300) disposée entre lesdits bras de préhension (254) et saisie par ceux-ci.

5. Procédé d'élévation ou d'abaissement d'un objet, le procédé comprenant :
tandis que ledit objet est situé à une hauteur d'origine, la préhension dudit objet avec les bras de préhension (254) du système de préhension (10) selon l'une quelconque des revendications 1 à 4 ; et
le pivotement desdites première et seconde paires de bras (212, 218) par rapport audit support d'ancrage (200), provoquant le mouvement vertical desdits bras de préhension (254) et dudit objet saisi entre eux jusqu'à une hauteur de destination,
dans lequel ledit objet comprend un plateau multi-cavités (300), et dans lequel, pendant ledit pivotement desdites première et seconde paires de bras (212, 218), une orientation angulaire entre ledit objet et un plan x-y reste constante dans un seuil de 0,2 degrés.

6. Procédé selon la revendication 5, comprenant en outre le déplacement dudit système de préhension (10) à l'aide dudit système de mobilisation, tout en maintenant ledit niveau d'objet.
